# EUROPÄISCHE PATENTSCHRIFT

(11) **EP 1 182 064 B1**
(45) Veröffentlichungstag und Bekanntmachung des Hinweises auf die Patenterteilung: **11.01.2006**
(21) Anmeldenummer: 01119014.7
(22) Anmeldetag: 07.08.2001
(51) Int. Cl.: B60G 25/00, B62D 33/067

(54) **Fahrerhauslagerung**
Cab suspension
Suspension de cabine

(30) Priorität: 25.08.2000 DE 10041953
(43) Veröffentlichungstag der Anmeldung: 27.02.2002
(73) Patentinhaber: ZF Sachs AG, 97424 Schweinfurt (DE)
(72) Erfinder: Gross, Alexander, Dipl.-Ing., 97653 Bischofsheim (DE); Förster, Andreas, Dipl.-Ing., 97422 Schweinfurt (DE); Lutz, Dieter, Dipl.-Ing., 97422 Schweinfurt (DE); Hurrlein, Michael, Dipl.-Ing., 97762 Hammelburg (DE)

(56) Entgegenhaltungen:
- DE-A- 2 161 953
- DE-A- 2 217 182
- DE-A- 19 723 440
- FR-A- 2 048 545

## Beschreibung

Die Erfindung betrifft eine Fahrerhauslagerung entsprechend dem Oberbegriff von Patentanspruch 1.

Aus der DE 22 17 182 C3 ist eine Abstützung des vorderen Endes einer Fahrerhauslagerung, umfassend eine Feder-Schwingungsdämpferkombination, deren Schwingungsdämpfer zur Längs- und Querführung starr mit einem Fahrzeugrahmen verbunden ist, wobei zusätzlich zu den Federbeinen zwischen zwei Lagern ein Stabilisator quer angeordnet ist, der einem Wankmoment des Fahrerhauses entgegenwirkt, bekannt. Der große Vorteil dieser Art einer Fahrerhauslagerung besteht darin, dass die Führungskräfte für das Fahrerhaus von dem Schwingungsdämpfer aufgenommen werden. Der Stabilisator übemimmt keinerlei Führungskräfte, sondem übt nur Stützkräfte bei einer Wankbewegung des Fahrerhaus aus. Die gleichseitige Einfederungsbewegung beider Feder-Schwingungsdämperkombinationen wird vom Stabilisator nicht beeinflußt.

Bei der Fahrerhauslagerung nach der DE 22 17 182 C3 wird das abgewinkelte Ende des Stabilisators in einem Lagerbolzen des Schwingungsdämpfers geführt. Um die Relativbewegung zwischen dem Stabilisator und dem Schwingungsdämpfer ausgleichen zu können, besteht zwischen dem abgewinkelten Ende des Stabilisators und dem Lagerbolzen ein Schiebesitz. Ein derartiger Schiebesitz ist mit einer nur schwer definierbaren Reibungskraft behaftet. Des weiteren werden die Stützkräfte des Stabillsators über den Lagerbolzen auf die Kolbenstange des Schwingungsdämpfers als Biegemoment übertragen. Dadurch steigen die Reibungskräfte im Schwingungsdämpfer deutlich an.

Die DE 197 23 440 A1 beschreibt eine Fahrerhauslagerung mit einem Federbein und einem quer zur Fahrzeuglängsachse angeordneten Stabilisator. Der Stabilisator umfasst zwei Hebel, die über ein Verbindungsorgan mit je einem Rahmenträger verbunden sind. An dem Hebel greift eine Vertikalstrebe an, wobei eine Gummibuchse eine Drehbewegung zwischen dem Hebel und der Vertikalstrebe ermöglicht.

Aufgabe der vorliegenden Erfindung ist es, eine Fahrerhauslagerung zu schaffen, bei der einerseits die Federungsbewegung des Fahrerhauses unabhängig vom Stabilisator erfolgt und insgesamt eine leichte und kompakte Konstruktion erreicht werden kann.

Erfindungsgemäß wird die Aufgabe durch die Merkmale des Patentanspruchs 1 gelöst.

Der Übertragungshebel sorgt für eindeutige Kräfteverhältnisse und damit Reibungszustände innerhalb der Fahrerhauslagerung. Des weiteren werden durch die getrennte fahrerhausseitige Lagerung des Stabilisators bwz. des Übertragungshebels zum Schwingungsdämpfer keine Kräfte vom Stabilisator auf den Schwingungsdämpfer übertragen. Dadurch sinkt einerseits die Reibungskraft innerhalb des Schwingungsdämpfers und andererseits kann eine vergleichsweise dünnere Kolbenstange beim Schwingungsdämpfer eingesetzt werden.

In zunehmnden Maße wird auch bei Nutzfahrzeugen das Crashverhalten berücksichtigt. Das Fahrerhaus kann eine Verschiebebewegung in Fahrzeuglängsrichtung ausführen, wodurch ein erheblich der Teil der Aufprallenergie bei einem Unfall aufgenommen wird.

Im Hinblick auf eine schnelle und einfache Montage innerhalb einer Großserienfertigung nimmt eine Fahrerhauskonsole das Lager für den Schwingungsdämpfer und die Lagerstelle für den Übertragungshebel auf. Die Baugruppe Feder Schwingungsdämpferkombination mit dem Stabiliator und den Übertragungshebein kann zusammen mit den Fahrerhauskonsolen unabhängig vom Fließband des Fahrzeugherstellers vormontiert werden.

Eine besonders kostengünsitge Lösung wird dadurch erreicht, dass die Solldeformationsstelle von einer Schelle gebildet wird, in die den Schwingungsdämpfer eingespannt ist.

Bei einem kippbaren Fahrerhaus muss sichergestellt sein, dass die gekippte Stellung unter allen Betriebsbedingungen eingehalten wir, insbesondere im Hinblick auf die Unfallverhütung. Dazu weist der Schwingungsdämpfer ein fahrerhausseitiges Gelenklager auf, das eine Kippbegrenzung für das Fahrerhaus darstellt.

In weiterer vorteilhafter Ausgestaltung wird die Kippbegrenzung von einer Anschlagfläche des fahrerhausseitigen Gelenklagers gebildet.

Dabei kommt die Fahrerhauskonsole des Fahrerhauses bei maximaler Kippstellung an der Anschlagfläche des Gelenklagers zur Anlage.

Anhand der folgenden Figurenbeschreibung soll die Erfindung näher erläutert wer den:

Es zeigt:
- Fig. 1: Fahrerhauslagerung/Eibausitutation
- Fig. 2: Fahrerhauslagerung, als Baugruppe
- Fig. 3: Fahrerhauslagerung bei gekippter Stellung des Fahrerhauses.

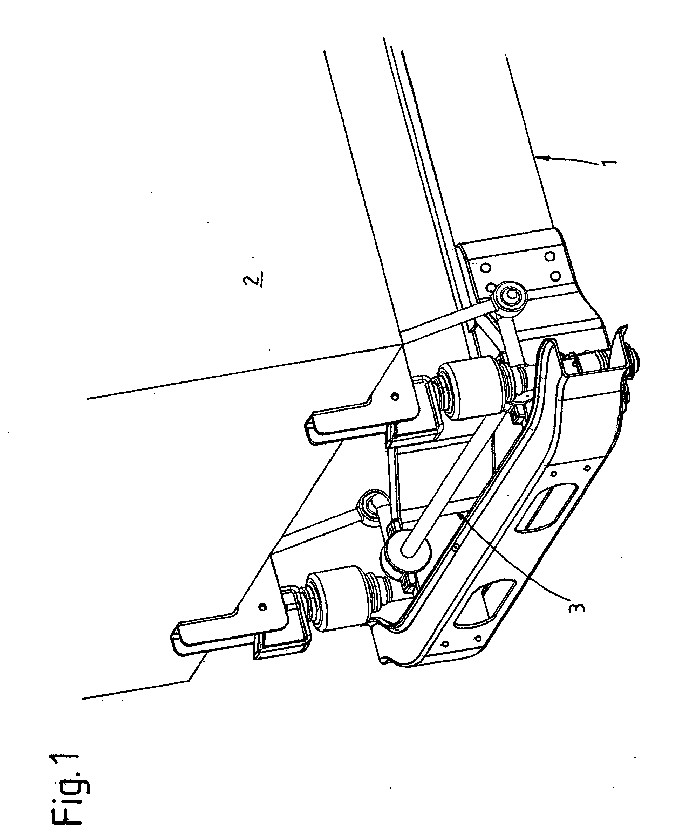

Die Fig. 1 zeigt einen vorderen Teil eines Fahrzeugrahmens 1, auf dem ein nur stilisiert dargestelltes Fahrerhaus 2 über eine Fahrerhauslagerung 3 angeordnet ist.

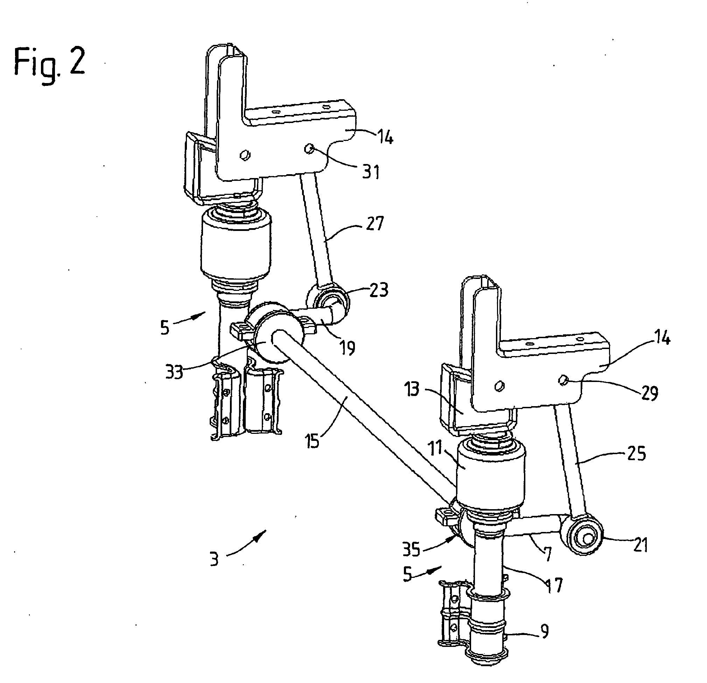

In der Fig. 2 ist die Fahrzerhauslagerung 3 als Baugruppe dargestellt. Die Fahrerhauslagerung umfasst in diesem Ausführungsbeispiel zwei Feder-Schwingungsdämpferkombinationen 5. Jeder der Schwingungsdämpfer besteht prinzipiell aus einer nicht sichtbaren Kolbenstange, die innerhalb eines Zylinders 7 axial verschiebbar ist. Es gibt verschiedene Arten des Schwingungsdämpfers, beispielsweise nach dem Einrohr- oder dem Zweirohrdämpferprinzip, mit verstellbarer Dämpfkraft oder konventionell. Die Erfindung ist unabhängig von der Schwingungsdämpferkonstruktion zu betrachten.

Der Zylinder 7 ist über eine Schelle 9 am Fahrzeugrahmen befestigt. Als Feder 11 kommen. Schrauben- oder auch Luftfedern zur Anwendung. Insbesondere bei Fahrzeugen, die einen gewissen Fahrkomfort genügen müssen, werden häufig Luftfedern eingesetzt. Am oberen Ende der Kolbenstange als fahrerhausseitiges Lager ist ein Gelenklager 13 angeordnet, das eine kardanische Beweglichkeit des Schwingungsdämpfers ermöglicht. Am Gelenklager ist eine Fahrerhauskonsole 14 schwenkbar befestigt, die das Fahrerhaus 2 trägt.

Zur Abstützung von Wankbewegungen des Fahrerhauses um die Fahrzeuglängsachse dient ein quer zur Fahrzeuglängsachse verlaufender Stabilisator 15, dessen abgewinkelten Enden 17; 19 jeweils eine Lagerstelle 21; 23 für einen Übertragungshebel 25; 27 aufweisen. Die Übertragungshebel greifen jeweils in einem fahrerhausseitigen Lager 29; 31 an, das Bestandteil der Fahrerhauskonsole 14 ist.

Aufgrund der funktionalen Trennung der Gelenkaugen 13 von den Lagern 29 kann der Stabilisator 15 keine Kräfte in den Schwingungsdämpfer einleiten.

Bei einer Federrungsbewegung des Fahrerhauses 2 führt der Schwingungsdämpfer eine rein axiale Federungsbewegung aus, wobei sich der Abstand der Schelle 9 zum Gelenklager 13 geradlinig ändert. Der Stabilisator übt keinen Einfluss auf die Federungsbewegung aus. Innerhalb von Lagern 33; 35, die am Fahrzeugrahmen 1 befestigt sind, führt der Stabilisator eine Drehbewegung aus, wobei die abgewinkelten Enden 17; 19 des Stabilisators ebenfalls eine Drehbewegung mitausführen. Bei der Drehbewegung des Stabilisators verändert sich der eingeschlossene Winkel zwischen dem abgewinkelten Ende 17; 19 und dem jeweiligen Übertragungshebel 25; 27. Aufgrund der Lagerstellen 21; 23 und den Lagern 29; 31 an den Fahrerhauskonsolen übt der Stabilisator 15 keinen Einfluss auf die Bewegungsbahn des Fahrerhauses aus.

Bei einem Unfall, bei dem das Fahrerhaus 2 betroffen ist, kann sich das Fahrerhaus axial verschieben, wobei die Schelle 9 eine Solldeformationsstelle darstellt und eine Änderung der Winkelstellung der Feder-Schwingungsdämpferkombinaiton zur Fahrzeuglängsachse ermöglicht. Wird der Fahrzeugrahmen 1 deformiert, so kann es zu keinen Verspannungen am Stabilitor kommen, da die Lagerstellen eine entsprechende Winkelstellung des Übertragungshebels 25; 27 zulassen.

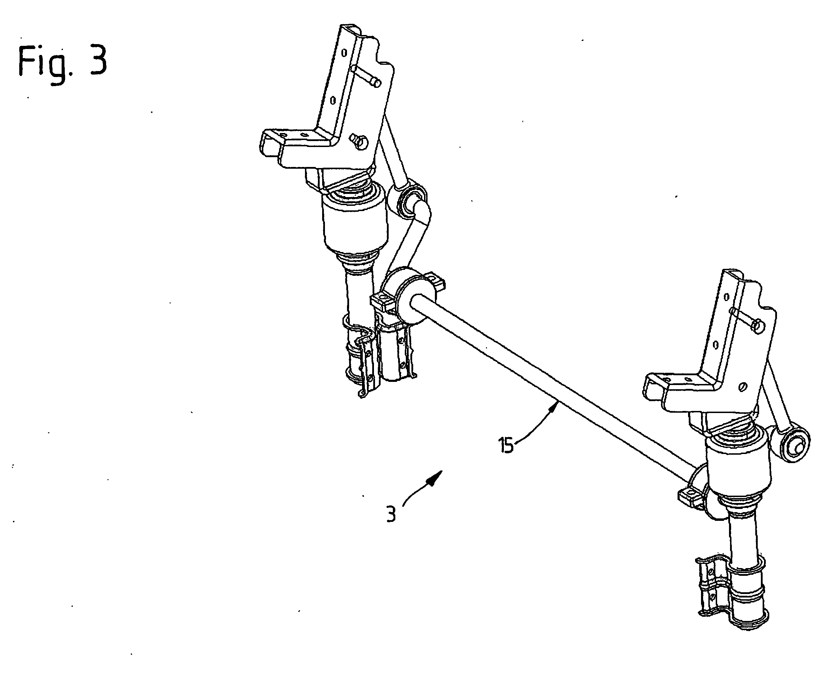

In der Fig. 3 ist die Fahrerhauslagerung bei einem gekippten Fahrerhaus 2 dargestellt. Wie man sieht, führt der Stabilisator zwar die Kippbewegung synchron mit dem Fahrerhaus aus, doch überträgt er keine Stützkräfte. Die Kippbewegung des Fahrerhauses wird durch das fahrerhausseitige Gelenklager 13 begrenzt, das eine Anschlagfläche 37; 39 für die Fahrerhauskonsole 14 aufweist.

## Patentansprüche

1. Fahrerhauslagerung (3), umfassend eine Feder-Schwingungsdämpferkombination (5), deren Schwingungsdämpfer zur Längs-und Querführung im wesentlichen starr mit einem Fahrzeugrahmen (1) verbunden ist, wobei zusätzlich zu den Federbeinen quer zwischen zwei Lagern ein Stabilisator (15) angeordnet ist, der einem Wankmoment des Fahrerhauses (2) entgegenwirkt,
**dadurch gekennzeichnet,**
**dass** der Stabilisator (15) endseitig jeweils eine Lagerstelle (21; 23) aufweist, die mit einem drehbaren Übertragungshebel (25; 27) verbunden ist, der wiederum fahrerhausseitig in einem Lager (29; 31) angreift, das unabhängig vom Lager (13) des Fahrerhauses (2) zum Schwingungsdämpfer (5) ist, wobei die Befestigung des Schwingungsdämpfers (5) als eine Solldeformationsstelle ausgeführt ist, die bei einer Belastung oberhalb einer Normalbetriebbelastung eine Winkelbewegung des Schwingungsdämpfers (5) ermöglicht.

2. Fahrerhauslagerung nach Anspruch 1,
**dadurch gekennzeichnet,**
**dass** eine Fahrerhauskonsole (14) das Lager (13) für den Schwingungsdämpfer (5) und die Lagerstelle (29; 31) für den Übertragungshebel (25; 27) aufnimmt.

3. Fahrerhauslagerung nach Anspruch 1,
**dadurch gekennzeichnet,**
**dass** die Solldeformationsstelle von einer Schelle (9) gebildet wird, in die der Schwingungsdämpfer (5) eingespannt ist.

4. Fahrerhauslagerung nach Anspruch 1,
**dadurch gekennzeichnet,**
**dass** der Schwingungsdämpfer (5) ein fahrerhausseitiges Gelenklager (13) aufweist, das eine Kippbegrenzung für das Fahrerhaus (2) darstellt.

5. Fahrerhauslagerung nach Anspruch 4,
**dadurch gekennzeichnet,**
**dass** die Kippbegrenzung von einer Anschlagfläche (37; 39) des fahrerhausseitigen Gelenklagers (13) gebildet wird.

6. Fahrerhauslagerung nach Anspruch 5,
**dadurch gekennzeichnet,**
**dass** die Fahrerhauskonsole (14) des Fahrerhauses (2) bei maximaler Kippstellung an der Anschlagfläche (37;39) zur Anlage kommt.

## Claims

1. Driver's cab mounting (3), comprising a spring-vibration damper combination (5), the vibration damper of which is connected substantially rigidly to a vehicle frame (1) for longitudinal and transverse guidance, a stabilizer (15) which counteracts a rocking moment of the driver's cab (2) being arranged, in addition to the spring struts, transversely between two bearings, **characterized in that**, àt the ends, the stabilizer (15) has in each case one bearing point (21; 23) which is connected to a rotatable transmission lever (25; 27) which in turn engages on the driver's cab side in a bearing (29; 31) which is independent of the bearing (13) of the driver's cab (2) to the vibration damper (5), the fastening of the vibration damper (5) being configured as a predetermined deformation point which makes an angular movement of the vibration damper (5) possible in the event of a loading above a normal operational loading.

2. Driver's cab mounting according to Claim 1, **characterized in that** a driver's cab bracket (14) accommodates the bearing (13) for the vibration damper (5) and the bearing point (29; 31) for the transmission lever (25; 27).

3. Driver's cab mounting according to Claim 1, **characterized in that** the predetermined deformation point is formed by a strap (9), into which the vibration damper (5) is clamped.

4. Driver's cab mounting according to Claim 1, **characterized in that** the vibration damper (5) has a pivot bearing (13) on the driver's cab side which constitutes a tilting limit for the driver's cab (2).

5. Driver's cab mounting according to Claim 4, **characterized in that** the tilting limit is formed by a stop face (37; 39) of the pivot bearing (13) on the driver's cab side.

6. Driver's cab mounting according to Claim 5, **characterized in that** the driver's cab bracket (14) of the driver's cab (2) comes into contact with the stop face (37; 39) in the maximum tilting position.

## Revendications

1. Suspension de cabine (3), comprenant une combinaison (5) d'amortisseur de vibrations à ressort, dont l'amortisseur de vibrations est essentiellement connecté rigidement à un châssis de véhicule (1) en vue du guidage longitudinal et transversal, un stabilisateur (15) étant disposé en plus des jambes de forces transversalement entre deux paliers et agissant à l'encontre d'un couple de roulis de la cabine (2),
**caractérisée en ce que**
le stabilisateur (15) présente du côté de son extrémité à chaque fois un point d'appui (21 ; 23) qui est connecté à un levier de transfert rotatif (25 ; 27), lequel vient en prise à son tour du côté de la cabine dans un palier (29 ; 31) qui est indépendant du palier (13) de la cabine (2) associé à l'amortisseur de vibrations (5), la fixation de l'amortisseur de vibrations (5) étant réalisée sous forme de point de déformation de consigne, qui permet dans le cas d'une sollicitation supérieure à une sollicitation normale de fonctionnement, un mouvement angulaire de l'amortisseur de vibrations (5).

2. Suspension de cabine selon la revendication 1,
**caractérisée en ce qu'**une console de cabine (14) reçoit le palier (13) pour l'amortisseur de vibrations (5) et le point d'appui (29 ; 31) pour le levier de transfert (25 ; 27).

3. Suspension de cabine selon la revendication 1,
**caractérisée en ce que** le point de déformation de consigne est formé par un collier de serrage (9) dans lequel est serré l'amortisseur de vibrations (5).

4. Suspension de cabine selon la revendication 1,
**caractérisée en ce que** l'amortisseur de vibrations (5) présente un palier articulé (13) du côté de la cabine qui constitue une limite de basculement pour la cabine (2).

5. Suspension de cabine selon la revendication 4,
**caractérisée en ce que** la limite de basculement est formée par une surface de butée (37 ; 39) du palier articulé (13) du côté de la cabine.

6. Suspension de cabine selon la revendication 5,
**caractérisée en ce que**
la console de cabine (14) de la cabine (2) vient en appui contre la surface de butée (37 ; 39) dans la position de basculement maximale.
